# EUROPÄISCHE PATENTANMELDUNG

(11) **EP 1 080 953 A1**
(43) Veröffentlichungstag der Anmeldung: **07.03.2001**
(21) Anmeldenummer: 99117368.3
(22) Anmeldetag: 03.09.1999
(51) Int. Cl.: B60G 3/10, B60G 7/02, B60G 11/08, B60G 11/10, B60G 21/05, F16F 1/368

(54) **Radaufhängung für Kraftfahrzeuge mit einer radführenden Blattfeder**

(71) Anmelder: Ford Global Technologies, Inc., A subsidiary of Ford Motor Company, Dearborn, Michigan 48126 (US)
(72) Erfinder: Graaf, Roger, 6271 EK Gulpen (NL); Jagt van der, Pim, 6132 SL Sittard (NL)
(74) Vertreter: Drömer, Hans-Carsten, Dipl.-Ing.

(57) **Zusammenfassung**

Zur Begrenzung von Roll- bzw. Wankbewegungen des Fahrzeuges sind an den Enden der quer zum Fahrzeug angeordneten Blattfeder, an denen die Radträger angelenkt sind, Federarme ausgebildet, die kraftübertragend mit der Querblattfeder verbunden sind, insbesondere ein integraler Bestandteil der Querblattfeder sind. Die Federarme weisen zur Fahrzeuglängsmittenebene und verlaufen spitzwinklig zur Querblattfeder. Da die derart gestaltete Feder ein durchgängiges Bauteil (die winkelig verlaufenden Federarme können auch separat hergestellt und dann kraftschlüssig mit der Querblattfeder verbunden werden) ist, sind die beiden Räder direkt miteinander verbunden und die durch die einwinkelig verlaufenden Federarme gebildete Dreiecksform bewirkt eine querlenkerähnliche Funktion.

## Beschreibung

Die Erfindung betrifft eine Radaufhängung für Kraftfahrzeuge.

Aus DE 195 33 803 ist eine derartige Aufhängung mit quer zum Fahrzeug angeordneter Blattfeder bekannt. Die Blattfeder ist am Fahrzeugaufbau gelagert und am Radträger angelenkt. Die Abstützung am Fahrzeugaufbau ist beidseitig zur Fahrzeug-längsmittenebene mit speziellen elastischen Elementen ausgeführt.

Die quer angeordnete Blattfeder gehört seit langem zum Stand der Technik. Zum Beispiel ist in der DE 61 26 40 ein Stapel von Federn abgestufter Länge beschrieben. Für einen derartigen Federstapel zeigt DE 93 73 91 beidseitig der Längsmittenebene angeordnete quer zur Blattfederlängsrichtung orientierte halbzylindrische Spannelemente.

In DE 195 42 108 sind zur Längs- und Querabstützung der radführenden Querblattfeder zwei symmetrisch außerachsmittig angeordnete biegesteife Stützstreben vorgesehen, die zumindest im wesentlichen in Fahrzeuglängsrichtung ausgerichtet sind und mit ihrem einen Ende jeweils form- und winkelstark durch eine Klemmverbindung mit der Querblattfeder verbunden sind. Die freien Enden der Stützstreben sind über Gummikörper enthaltende kardanisch bzw. kugelige Bewegung ermöglichende Lager am Fahrzeugaufbau angelenkt. Durch die Stützen soll zusätzlich zur Längs- und Querabstützung die erforderliche Rollmomentabstützung erreicht werden, weil der zwischen den Stützen befindliche Blattfederbereich als gegen die Rollrichtung wirkende Torsionsfeder anzusehen ist. Die Abstützung zum Fahrzeugaufbau erfolgt hier über ein in der Fahrzeuglängsmittenebene angeordnetes niveauregelndes Stellglied und über die Lager der in Längsrichtung angeordneten Stützstreben.

Die Anforderung an einer Fahrzeugachse hinsichtlich Fahrstabilität und Agilität erfordern eine hohe Quersteifigkeit, für einen guten Abrollkomfort ist dagegen eine hohe Längsnachgiebigkeit erforderlich. Bisher bekannte Konzepte mit radführenden Blattfedern erfüllen diese Anforderung nicht. Aufgabe der Erfindung war es, die Vertikal- und Wankfederung des Fahrzeuges unter Berücksichtigung von Stabilitäts- und Komfortanforderungen mittels einer radführenden Blattfeder zu realisieren.

Zur Lösung dieser Aufgabe sind bei einer Radaufhängung für Kraftfahrzeuge mit einer radführenden und quer zum Fahrzeug angeordneten Blattfeder, die beidseitig einer Fahrzeuglängsmittenebene zum Kraftfahrzeugaufbau gelagert ist und die am Radträger angelenkt ist (Querblattfeder), an den Enden der Querblattfeder, an denen die Radträger angelenkt sind, Federarme ausgebildet, die kraftübertragend mit der Querblattfeder verbunden sind, insbesondere ein integraler Bestandteil der Querblattfeder sind. Die Federarme sind ebenfalls zum Kraftfahrzeugaufbau abgestützt. Da die derart gestaltete Feder ein durchgängiges Bauteil (die Federarme können auch separat hergestellt und dann formschlüssig mit der Querblattfeder verbunden werden ) ist, sind die beiden Räder direkt miteinander verbunden und durch die kraftübertragend verbundenen Federarme in Verbindung mit den Abstützungen zum Kraftfahrzeugaufbau wird eine querlenkerähnliche Funktion erreicht. Durch diese Kombination wird eine erheblich verbesserte Wankkompensation erreicht.

Die Federarme werden bevorzugt symmetrisch zur Fahrzeuglängsmittenebene ausgebildet.

Die Federarme weisen zur Fahrzeuglängsmittenebene und verlaufen bevorzugt spitzwinkelig zur Querblattfederlängsrichtung. Die Federarme und/oder die Endabschnitte der Querblattfeder können eine gebogene Form haben. In diesem Fall sollen die Fluchtlinien zwischen den Abstützungen zum Kraftfahrzeugaufbau und dem Verbindungspunkt von Querblattfeder und Federarm ein Dreieck mit einem spitzen Winkel am Verbindungspunkt bilden.

Weiter bevorzugt ist, daß der Abstand der am Ende der Federarme angeordneten Abstützungen etwa dem Abstand der Abstützungen der Querblattfeder entspricht.

Durch die Abstützung der Federarmenden und der Querblattfeder am Fahrzeugaufbau und die Verbindung am Anlenkungspunkt für den Radträger gebildete dreieckige Form ergibt sich unmittelbar als Bestandteil der Feder eine Querlenkerfunktion mit der Längs- und Querkräfte aufgenommen werden können.

Für die Querblattfeder und die Federarme kommen unterschiedliche Querschnittsformen in Längs- wie Querrichtung in Betracht. Durch die verschiedenen Querschnittsformen und die lokale Variation der Querschnitte der Querblattfeder und der Federarme können die einzelnen Funktionen Vertikalfederung, Wankkompensation und Längsnachgiebigkeit der Achse getrennt voneinander optimiert werden. Insbesondere kann durch eine Abstimmung der Krümmungsradien in der Vertkal- und/oder Horzontalebene und die Anordnung der Abstützungen zum Fahrzeugaufbau die Optimierung erfolgen.
An den Enden der Federarme angeordnete Gummilager zum Fahrzeugaufbau können vorteilhaft für eine progressive Längssteifigkeit und Dämpfung eingesetzt werden.

Zur Verminderung der longitudinalen Steifigkeit der Querblattfeder kann diese insbesondere Abschnitte verringerter Breite aufweisen, wodurch die Längskräfte verstärkt von den Federarmen aufgenommen werden.

Bevorzugt ist im Bereich der verringerten Breite der Querblattfeder (Einschnürung) ein senkrecht zur Oberfläche der Querblattfeder und in deren Längsrichtung verlaufender, in Einbaurichtung etwa vertikal ausgerichteter Steg angeordnet, der zu einer erhöhten Torsionssteifigkeit führt. Der Steg selber kann vorteilhaft die Abstützung der Querblattfeder zum Fahrzeugaufbau aufnehmen. Über die Gestaltung der Anbindungspunkte an dem Fahrzeugaufbau kann die Wankkompensation beeinflußt werden. Eine gelenkige Anbindung ermöglicht eine hohe Wankkompensation, eine feste Einspannung verringert diese.

Zur Erzielung der gewünschten elastokinematischen Eigenschaften, wie z.B. Rollzentrumshöhe, Spur- und Sturzänderungen durch Einfedem bzw. Wanken des Fahrzeuges sowie durch Längs- und Seitenkräften können die Querblattfedern und die Federarme gekrümmt sein, wobei insbesondere die Federarmenden unterschiedliche Krümmungsradien als die Querblattfeder aufweisen können. Die Endabschnitte der Federarme in Einbaulage können höher oder tiefer als die Querblattfeder angeordnet sein.
Aus Platzgründen (z.B. Höhenbedarf für das Getriebe) kann insbesondere die Querblattfeder in der Fahrzeugquerebene schwingenförmig ausgebildet sein.

Die beschriebene Querblattfeder kann zur Verringerung der zu federnden Massen aus faserverstärktem Kunststoff hergestellt sein, wodurch sich insbesondere eine deutliche Verminderung der hochfrequenten Schwingungen ergibt. Bei dieser Ausführung können auch aufwendige Gummilagerelemente zur Abstützung am Fahrzeugaufbau entfallen.

Die erfindungsgemäße Querblattfeder mit Federarmen kann für die untere oder die obere Radanlenkung in Verbindung mit einem Dämpfer bei oder einem weiteren Querlenker aber auch für beide Radanlenkungen verwendet werden.

Durch die Verwendung der erfindungsgemäßen Querblattfeder kann die Wank- bzw. Rollbewegung soweit reduziert werden, daß ein separater Stabilisator nicht mehr erforderlich ist.

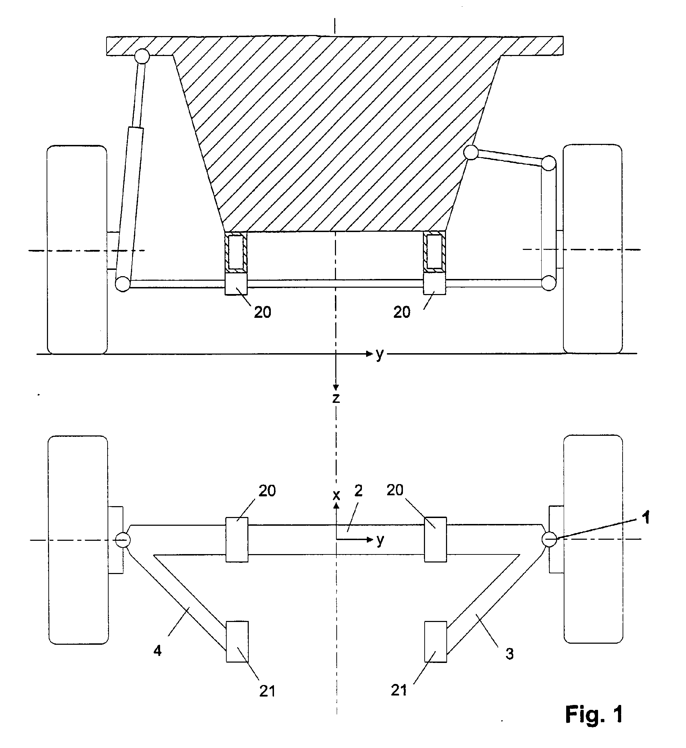

Fig. 1 zeigt eine Vorderansicht der Querblattfeder mit Federarmen und einen Grundriß. An der Radaufhängung 1 ist die Querblattfeder 2 mit spitzwinklig dazu verlaufenden Federarmen 3, 4 angeordnet. Die Federarme 3, 4 sind hier als integraler Bestandteil der Querblattfeder dargestellt. Die Querblattfeder 2 ist in Abstützungen 20 gummielastisch zum Fahrzeugaufbau gelagert. Die Federarmenden sind in Abstützungen 21 gummielastisch zum Fahrzeugaufbau gelagert.

Die Federarme 3, 4 können entgegen der Vorwärts-Fahrtrichtung x (wie in Fig. 1 dargestellt) oder in Vorwärts-Fahrtrichtung angeordnet sein.

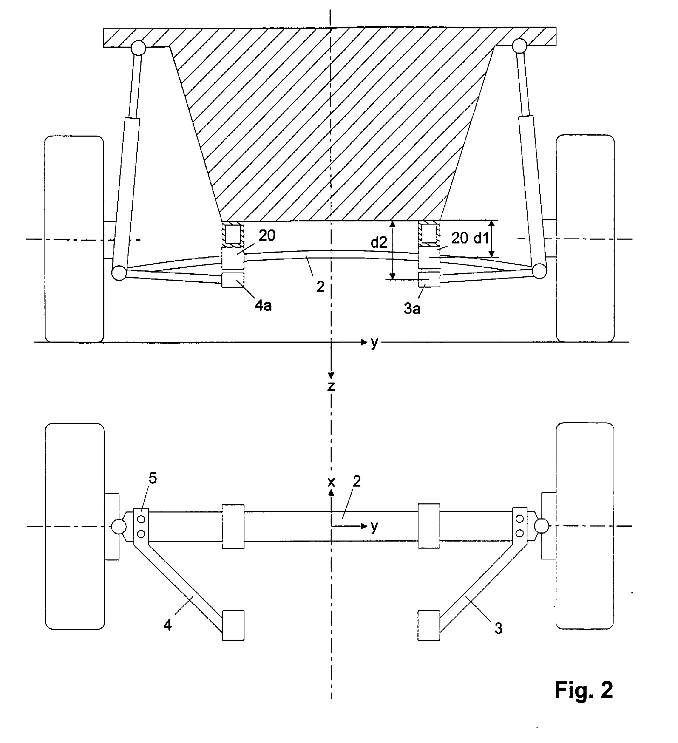

Wie in Fig. 2 ersichtlich, können die Federarme 3, 4 als separate Teile ausgebildet sein und sind dann mit der Querblattfeder 2 im Bereich der Anlenkpunkte 5 formschlüssig verbunden. Bei dieser aber auch bei der einstückigen Ausführung können die Federarme 3, 4 - bezogen auf Vertikalebene (in Einbaulage) - einen anderen Krümmungsradius als die Querblattfeder 2 aufweisen. Die Enden 3a, 4a der Federarme 3, 4 können insbesondere (in Einbaulage) tiefer oder höher als die Querblattfeder 2 angeordnet sein (Abstand d2 der Federarmenden 3a, 4a zum Fahrzeugaufbau größer bzw. kleiner als Abstand d1 der Querblattfeder zum Fahrzeugaufbau).

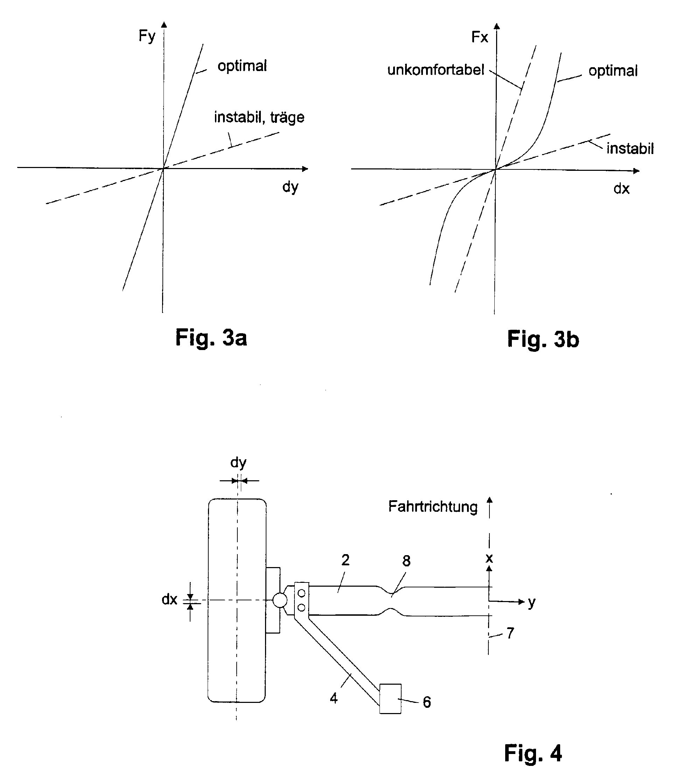

Wie in Fig. 3 dargestellt (in Verbindung mit Fig. 4), ist für die Fahrstabilität und Agilität eine hohe Quersteifigkeit der Achse erforderlich (Fy verläuft steil gegen die Verschiebung in Querrichtung dy). Für eine hohe Stabilität beim Bremsen ist eine ausreichende longitudinale Steifigkeit bei hohen Längskräften erforderlich. Als ideal ist daher der in Fig. 3 dargestellte progressive Verlauf der Längssteifigkeit Fx gegen die Verschiebung in Längsrichtung dx anzusehen.

Wie in den Fig. 4 dargestellt, kann die Querblattfeder 2 zur Verlagerung der Longitudinalkräfte auf den Federarm 4 eine Einschnürung 8 aufweisen, die bevorzugt im wesentlichen den gleichen Abstand von der Fahrzeuglängsmittenebene 7 aufweist, wie die Abstützung 6 des Federarmes, mit der dieser mit dem Fahrzeugaufbau verbunden ist.

Durch die Einschnürung 8 wird die longitudinale Steifigkeit der Querblattfeder 2 verringert, wodurch die Längskräfte verstärkt von dem Federarm 4 aufgenommen werden. Der progressive Anstieg der longitudinalen Steifigkeit und gleichzeitig die Dämpfung werden über ein am Federarmende angeordnetes gummielastisches Lager an der Abstützung 6 realisiert.

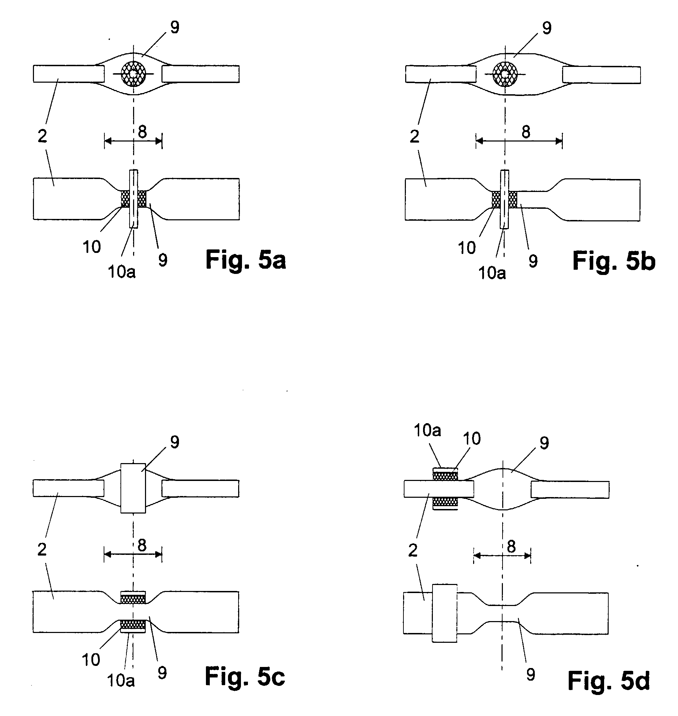

Wie in den Figuren 5 a bis d dargestellt, weist die Querblattfeder bevorzugt im Bereich einer Einschnürung 8 einen Steg 9 auf, der etwa senkrecht zur Querblattfeder und in deren Längsrichtung verläuft, wobei vorteilhaft an diesem Steg die Abstützung 10a zum Fahrzeugaufbau insbesondere unter Verwendung von Gummilagern 10 vorgesehen ist.

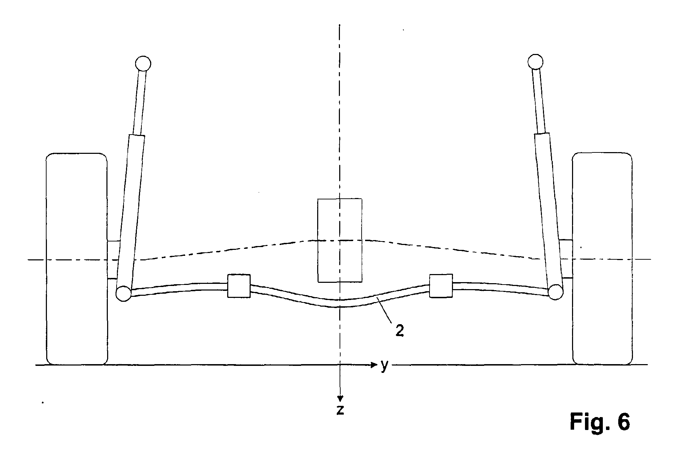

In Fig. 6 weist in der Vorderansicht (Einbaulage) die Querblattfeder eine schwingenförmige Kontur auf, wodurch insbesondere bei einer angetriebenen Achse der notwendige Bauraum für das Getriebe bzw. das Achsgetriebe berücksichtigt wird.

## Patentansprüche

**1.** Radaufhängung für Kraftfahrzeuge mit einer radführenden und quer zum Fahrzeug angeordneten Querblattfeder, die beidseitig einer Fahrzeug-längsmittenebene zum Kraftfahrzeugaufbau gelagert ist und die am Radträger angelenkt ist,
**dadurch gekennzeichnet,** daß
an der Querblattfeder (2), ausgehend von deren Enden, Federarme (3, 4) angeordnet sind, die mit der Querblattfeder (2) kraftübertragend, insbesondere kraftschlüssig verbunden sind und die sich am Kraftfahrzeugaufbau abstützen.

**2.** Radaufhängung nach Anspruch 1,
**dadurch gekennzeichnet,** daß
die Federarme (3, 4) symmetrisch zur Fahrzeuglängsmittenebene angeordnet sind.

**3.** Radaufhängung nach Anspruch 1 oder 2,
**dadurch gekennzeichnet,** daß
die Federarme (3, 4) zur Fahrzeuglängsmittenebene hinweisen und spitzwinkelig zur Querblattfederlängsrichtung verlaufen.

**4.** Radaufhängung nach Anspruch 1 oder 2,
**dadurch gekennzeichnet,** daß
der Abstand der Enden (3a, 4a) der Federarme (3, 4) etwa dem Abstand von Abstützungen (20) der Querblattfeder (2) entspricht.

**5.** Radaufhängung nach einem der Ansprüche 1 bis 4,
**dadurch gekennzeichnet,** daß
Abstützungen (6, 21) der Federarme am Kraftfahrzeugaufbau sich an den Enden (3a, 4a) der Federarme (3, 4) befinden.

**6.** Radaufhängung nach einem der Ansprüche 1 bis 5,
**dadurch gekennzeichnet,** daß
der Krümmungsradius der Federarme (3, 4) kleiner oder größer ist als derjenige der Querblattfeder (2).

**7.** Radaufhängung nach einem der Ansprüche 1 bis 6,
**dadurch gekennzeichnet,** daß
die Enden (3a, 4a) der Federarme (3, 4) in Einbaulage tiefer oder höher als die Querblattfeder (2) angeordnet sind.

**8.** Radaufhängung nach einem der Ansprüche 1 bis 7,
**dadurch gekennzeichnet,** daß
die Querblattfeder (2) Abschnitte verminderter Breite (8) aufweist, die etwa im gleichen Abstand von der Fahrzeuglängsmittenebene angeordnet sind, wie die nach innen weisenden Enden (3a, 4a) der Federarme (3, 4).

**9.** Radaufhängung nach einem der Ansprüche 1 bis 8,
**dadurch gekennzeichnet,** daß
die an den Federarmen (3, 4) angeordneten Abstützungen (6, 10, 10a, 21) zum Fahrzeugaufbau gummielastische Dämpfer aufweisen.

**10.** Radaufhängung nach einem der Ansprüche 1 bis 9,
**dadurch gekennzeichnet,** daß
die Querblattfeder (2) symmetrisch zur Fahrzeuglängsmittenebene jeweils einen Abschnitt geringerer Breite (8) aufweist.

**11.** Radaufhängung nach Anspruch 10,
**dadurch gekennzeichnet,** daß
in dem Abschnitt geringerer Breite ein etwa senkrecht zur Querblattfeder und in deren Längsrichtung verlaufender Steg (9) angeordnet ist.

**11.** Radaufhängung nach Anspruch 10,
**dadurch gekennzeichnet,** daß
die Abstützung (10, 10a) zum Kraftfahrzeugaufbau an dem in Einbaulage etwa vertikal verlaufenden Steg (9) angeordnet ist.

**12.** Radaufhängung nach einem der Ansprüche 1 bis 11,
**dadurch gekennzeichnet,** daß
Querblattfeder (2) und die Federarme (3, 4) einstückig ausgeführt sind.

**13.** Radaufhängung nach einem der Ansprüche 1 bis 12,
**dadurch gekennzeichnet,** daß
Querblattfeder (2) und Federarme (3, 4) aus faserverstärktem Kunststoff bestehen.
